# EUROPÄISCHE PATENTSCHRIFT

(11) **EP 1 354 886 B1**
(45) Veröffentlichungstag und Bekanntmachung des Hinweises auf die Patenterteilung: **26.08.2009**
(21) Anmeldenummer: 03007874.5
(22) Anmeldetag: 07.04.2003
(51) Int. Cl.: C07F 9/50, C07F 9/54, C07C 45/50

(54) **Verfahren zur Herstellung tertiärer Phosphane**
Process for the preparation of tertiary phosphines
Procédé de préparation de phosphines tertiaires

(30) Priorität: 19.04.2002 DE 10217517; 17.05.2002 DE 10222033
(43) Veröffentlichungstag der Anmeldung: 22.10.2003
(73) Patentinhaber: Saltigo GmbH, 40764 Langenfeld (DE)
(72) Erfinder: Rampf, Florian, Dr., 50733 Köln (DE); Militzer, Hans-Christian, Dr., 51519 Odenthal (DE)
(74) Vertreter: Wichmann, Birgid

(56) Entgegenhaltungen:
- WO-A-99/09040
- US-A- 3 499 039
- US-A- 4 668 823
- TOMORI, H. ET AL: "An Improved Synthesis of Functionalized Biphenyl-Based Phosphine Ligands" JOURNAL OF ORGANIC CHEMISTRY (2000), 65(17), 5334-5341 , 2000, XP002248873
- KAYE, S. ET AL: "The use of catalytic amounts of CuCl and other improvements in the benzyne route to biphenyl-based phosphine ligands" ADVANCED SYNTHESIS & CATALYSIS (2001), 343(8), 789-794 , 2001, XP001161250
- SCHMIDBAUER H. ET AL: "Extreme sterische Hinderung: Synthese und Struktur des Tetra(tert-butyl)phosphonium Kations- ein Fall von T-Symmetrie" CHEMISCHE BERICHTE., Bd. 113, Nr. 4, 1980, Seiten 1612-1622, XP002248874 VERLAG CHEMIE GMBH. WEINHEIM., DE ISSN: 0009-2940
- DUMONT W.W. ET AL.: "Zinn(II)-halogenid- Komplexe mit Tri-tert-butylphosphin und Tris(dimethylamino)phosphin" ZEITSCHRIFT FUR ANORGANISCHE UND ALLGEMEINE CHEMIE., Bd. 441, 1978, Seiten 86-92, XP001160738 VERLAG JOHANN AMBROSIUS BARTH. LEIPZIG., DD ISSN: 0044-2313

## Beschreibung

Die Erfindung betrifft ein Verfahren zur Synthese tertiärer Phosphane durch Umsetzung von Halogenphosphanen mit Organomagnesium-Verbindungen in Gegenwart von Kupferverbindungen und von Salzen.

Viele tertiäre Phosphane besitzen eine hohe industrielle Bedeutung z.B. als Liganden für Metallatome zur Bildung von Metallkomplexen, als Reduktionsmittel oder in Form ihrer Oxide als Flammschutz-oder Extraktionsmittel. Metallkomplexe mit tertiären Phosphanen werden häufig als Katalysatoren in chemischen Reaktionen eingesetzt. Weiterhin können tertiäre Phosphane zur Absorption von Metallen z.B. aus flüssigen Medien eingesetzt werden.

Die Darstellung von tertiären Phosphanen kann üblicherweise durch Reaktion von Organometallverbindungen mit Halogenphosphanen erfolgen. Dabei werden überwiegend Organomagnesium- und Organolithium-Verbindungen eingesetzt. Mit zunehmendem sterischen Anspruch der einzuführenden oder bereits im Molekül vorhandenen organischen Reste wird es sehr schwierig tertiäre Phosphane zu erhalten.

So reagiert beispielsweise Phosphortrichlorid mit einem Überschuss von tert.-Butylmagnesiumchlorid nur zum Di(tert.-butyl)chlorphosphan (siehe Hoffmann, Schellenbeck, Chemische Berichte, 1967, 100 (2), 692-693), oder Dichlorphenylphosphan mit einem Überschuss tert.-Butylmagnesiumchlorid nur zum tert.-Butylchlorphenylphosphan (siehe Hoffmann, Schellenbeck, Chemische Berichte, 1966, 99, 1134-1142).

Bei der Synthese von Tricyclohexylphosphan aus Phosphortrichlorid und Cyclohexylmagnesiumverbindungen wird das gewünschte Produkt erst bei hoher Temperatur und mit geringen Ausbeuten erhalten (siehe Issleib, Brack; Zeitschr. allg. anorg. Chem. 1954, 277, 258-270).

Stambuli et al. konnten zeigen, dass unter Zusatz von Kupfer(I)iodid in Gegenwart von Lithiumbromid mit Organomagnesiumverbindungen auch Substitutionen an sterisch anspruchsvollen Arylalkyl-chlorphosphanen und tert.-Butyl-chlorphosphan möglich sind (J. Am. Chem. Soc., 2001, 123 (11), 2677-2678). Der hohe Kupfer- und Salzbedarf macht das Verfahren ebenso wie die benötigten Reaktionstemperaturen von -78°C technisch unpraktikabel.

Auch das Verfahren von Kaye et al. (Adv. Synth. Catal., 2001, 343 (8), 789-794), das die Reaktion von Bis-(arylgrignard)-Verbindungen mit Chlorphosphanen in Gegenwart von Kupfer(I)chlorid beschreibt benötigt große Mengen an Kupferverbindungen, was die technische Realisierung erschwert.

Die WO 99/09040 beschreibt die Synthese von sterisch anspruchsvoll substituierten Diphosphan-Verbindungen durch Reaktion eines Aryl-Digrignard-Reagenzes mit jeweils einem disubstituierten Chlorphosphan. Dies stellt die umgekehrte Herangehensweise zum hier beanspruchten Verfahren dar, das von Aryl-Chlorphosphanen ausgeht und - unter Katalyse - mit Alkylgrignard-Reagenzien umsetzt.

In Tomori, H. et. al. (J. Org. Chem., 2000, 65 (17) 5334-5341) werden Verbindungen der gleichen Art wie in Kayl et. al. (Adr. Synth. Catal., 2001, 343(8), 789-794) dargestellt, nur dass in Tomori, H. et. al. (J. Org. Chem., 2000, 65 (17) 5334-5341) das katalytisch wirksame Cu(I)-Salz noch in stöchiometrischer Menge eingesetzt wird. Die Möglichkeit der katalytischen Anwendung wurde zu diesem Zeitpunkt noch nicht erkannt.

US-A 3 499 039 beschreibt eine gängige Synthese sterisch nicht anspruchsvoller Phosphane.. Der Alkylsubstituent mit dem größen sterischen Anspruch ist iso-Propyl. Damit hat die Literaturstelle keinerlei Relevanz für Phosphane und Phosphoniumsalze.

US-A 4 668 823 beschreibt die Synthese von sperig substituierten asymmetrischen Dialkylaryl-oder Alkyldiarylphosphanen über die Umsetzung von Aryldihalogenphosphanen mit zwei verschiedenen Grignard-Reagenzien nacheinander in selben Reaktionsgefäß. Dabei wird die Selektivität für die gewünschten Produkte dadurch erreicht, daß der sterisch anspruchsvollere Grignard zunächst zur Reaktion gebracht wird und der weniger sterisch anspruchsvolle Grignard als zweites Reagenz eingesetzt wird. Die Reaktionen werden ohne Zuhilfenahme eines Katalysators durchgeführt. Dabei wird allerdings die doppelte Einführung eines tert.-Butylrestes am Aryldihalogenphosphan nicht beschrieben. Als zweite Grignard-Reagenzien kommen - mit einer Ausnahme - nur wenig sperrige Verbindungen aus der Reihe der n-Alkyl-Grignards zur Anwendung, die den Einsatz eines Katalysators nicht erforderlich machen.

Schmidbauer et. al. (Chem. Ber., 1980, Bd. 113, 1612-1622) beschreibt eine Synthese eines tetratert.-butylphosphoniumsalzes dar.

Dumont et. al. (Zeitschrift für anorganische und allgemeine Chemie, 1978, Bd. 441, 86-92) beschreibt Zinn(II)-halogenid-Komplexe mit Tri-tert-butylphosphin und Tris(dimethylamino)phosphin.

Es bestand deshalb das Bedürfnis, ein Verfahren bereitzustellen, das die Darstellung von tertiären Phosphanen in effizienter und technisch akzeptabler Weise ermöglicht.

Es wurde nun ein Verfahren zur Herstellung von Verbindungen der Formel (Ia) gefunden

PR¹ₙAr₍₃₋ₙ₎ (Ia),

in denen
- R¹: jeweils für C₁-C₁₂-Alkyl, SiR²₃, (C₁-C₈-Alkylen)-SiR²₃, C₁-C₁₂-Fluoralkyl, Phenyl, Pyridyl, o-,m- oder p-Tolyl, Naphthyl oder Benzyl steht wobei die Reste
- R²: jeweils unabhängig voneinander für C₁-C₁₂-Alkyl stehen
und wobei in Formel (Ia)
- n: für eins oder zwei steht und
- Ar: für einen substituierten oder unsubstituierten Arylrest steht,
das dadurch gekennzeichnet ist, dass Halogenphosphane der Formel (IIa)

PXₙAr₍₃₋ₙ₎ (IIa),

in denen
- n: für eins oder zwei steht
- X: jeweils unabhängig für Chlor, Brom oder Iod und
in Formel (IIa) Ar die gleiche Bedeutung besitzt, die unter der Formel (Ia) genannt wurde mit Organomagnesiumverbindungen der Formeln (IIIa) umgesetzt werden

(R¹)ₘMg(Y)(₂₋ₘ) (IIIa)

in der
- R¹: die unter der Formel (Ia) genannten Bedeutungen besitzen und
- m: für eins oder zwei steht und
- Y: für Chlor, Brom oder Iod steht
wobei die Umsetzung jeweils
- in Gegenwart von Kupfer (I) bromid-Dimethylsulfid-Komplex und
- in Gegenwart von Salz und
- gegebenenfalls in Gegenwart von Lösungsmittel und die tertiären Phosphane in Form der analogen Phosphonium-tetrafluorborate oder-hexafluorophosphate mit Tetrafluoroborsäure oder Hexafluoro phosphorsäure ausgefällt werden und durch Zusatz einer Base freigesetzt it werden durchgeführt wird.

Es sei an dieser Stelle darauf hingewiesen, dass vom Rahmen der Erfindung beliebige Kombinationen von Vorzugsbereichen mitumfasst sind.

Im Rahmen der Erfindung steht Ar beispielsweise und bevorzugt für carbocyclische aromatische Reste mit 6 bis 24 Gerüstkohlenstoffatomen oder heteroaromatische Reste mit 4 bis 24 Gerüstatomen, wobei keines, ein, zwei oder drei Gerüstatome pro Cyclus, im gesamten Molekül mindestens jedoch ein Gerüstatom Heteroatome sind, die ausgewählt sind aus der Gruppe Stickstoff, Schwefel oder Sauerstoff. Weiterhin können die carbocyclischen aromatischen Reste oder heteroaromatische Reste mit bis zu fünf gleichen oder verschiedenen Substituenten pro Cyclus substituiert sein, ausgewählt aus der Gruppe Fluor, Chlor, Brom, Nitro, Cyano, geschütztes Formyl C₁-C₁₂-Alkyl, C₁-C₁₂-Fluoralkyl, -PO-[(C₁-C₈)-Alkyl]₂,-PO-[Phenyl, Pyridyl, o-, m- oder -Tolyl oder naphtyl]₂,-PO-[(C₁-C₈)-Alkyl)Phenyl, Pyridyl, o-, m- oder p-Tolyl oder Naphtyl)], Tri(C₁-C₈-alkyl)siloxy oder Resten der Formel (IV),

A-D-R³ (IV)

in der unabhängig voneinander
- A: fehlt oder für einen C₁-C₈-Alkylenrest steht und
- D: für Sauerstoff, Schwefel oder NR⁴ steht,
wobei
- R⁴: Wasserstoff, C₁-C₈-Alkyl, Phenyl, Pyridyl, o-, m- oder p-Tolyl, Naphthyl oder Benzyl bedeutet und
- R³: für C₁-C₈-Alkyl, Benzyl C₁-C₈-Halogenalkyl oder Phenyl, Pyridyl, o-, m- oder p-Tolyl, oder Naphthyl
oder
in denen
- NR³R⁴: zusammen für einen cyclischen Aminorest steht, oder Resten der allgemeinen Formeln (Va-d)

A-SOR³ (Va)

A-SO₂-R³ (Vb)

A-CN (Vc)

A-CO₂M (Vd)
- A und R³: die oben angegebene Bedeutung besitzen und M ein Alkalimetallion, ein halbes Äquivalent eines Erdalkalimetallions oder ein quarternäres Ammoniumion bedeuten kann.

Alkyl bzw. Alkylen, bzw. Alkoxy bzw. Alkenyl bzw. Alkenylen bedeutet im Rahmen der Erfindung jeweils unabhängig einen geradkettigen, cyclischen, verzweigten oder unverzweigten Alkyl- bzw. Alkylen- bzw. Alkoxy-Rest, bzw. Alkenyl- bzw. Alkenylen-Rest der gegebenenfalls durch C₁-C₄-Alkoxy-Reste weiter substituiert sein kann.

Beispielsweise steht C₁-C₄-Alkyl für Methyl, Ethyl, n-Propyl, Isopropyl, n-Butyl und tert.-Butyl, C₁-C₈-Alkyl darüberhinaus für n-Pentyl, Cyclohexyl, n-Hexyl, n-Heptyl, n-Octyl oder iso-Octyl, C₁-C₁₂-Alkyl, weiter darüber hinaus z.B. für n-Decyl und n-Dodecyl.

Beispielsweise steht C₁-C₄-Alkylen für Methylen, 1,1-Ethylen, 1,2-Ethylen, 1,1-Propylen, 1,2-Propylen, 1,3-Propylen, 1,1-Butylen, 1,2-Butylen, 2,3-Butylen und 1,4-Butylen, C₁-C₈-Alkylen darüber hinaus für 1,5-Pentylen, 1,6-Hexylen, 1,1-Cyclohexylen, 1,4-Cyclohexylen, 1,2-Cyclohexylen und 1,8-Octylen, C₁-C₁₂-Alkylen weiter darüberhinaus für 1,2-(1,2-Dicyclopentyl)-ethylen.

Beispielsweise steht C₂-C₁₂-Alkenyl für Ethenyl, Allyl, But-3-enyl, Hex-5-enyl und Dec-10-enyl.

Beispielsweise steht C₂-C₁₂-Alkenylen für 1,2-Ethenylen, 1,4-But-2-enylen, 1,2- Cyclopentenylen und 1,2-Cyclohexenylen.

Beispielsweise steht C₁-C₄-Alkoxy für Methoxy, Ethoxy, Isopropoxy, n-Propoxy, n-Butoxy und tert.-Butoxy.

Die allgemeine Bezeichnung Aryl als weiterer Substituent umfasst carbocyclische Reste und heteroaromatische Reste in denen keines, ein, zwei oder drei Gerüstatome pro Cyclus, im gesamten Rest mindestens jedoch ein Gerüstatom Heteroatome ausgewählt aus der Gruppe Stickstoff, Schwefel oder Sauerstoff sind.

Fluoralkyl bedeutet im Rahmen der Erfindung jeweils unabhängig einen geradkettigen, cyclischen, verzweigten oder unverzweigten Alkylrest, der mit einem, mehreren oder vollständig mit Fluoratomen substituiert sein können.

Beispielsweise und bevorzugt steht C₁-C₄-Fluoralkyl für Trifluormethyl, 2,2,2-Trifluorethyl, Pentafluorethyl und Nonafluorbutyl, C₁-C₈-Fluoralkyl darüber hinaus für Perfluorcyclohexyl, Perfluorhexyl und Perfluoroctyl, C₁-C₁₂-Fluoralkyl weiter darüber hinaus Perfluordecyl und Perfluordodecyl.

Geschütztes Formyl bedeutet einen Formyl-Rest, der durch Überführung in ein Aminal, Acetal oder gemischtes Aminalacetal geschützt ist, wobei die Aminale, Acetale und gemischten Aminalacetale acyclisch oder cyclisch sein können.

Beispielsweise und bevorzugt steht geschütztes Formyl für einen 1,1-(2,5-Dioxy)-cyclopentylen-Rest.

Besonders bevorzugt steht Ar im Rahmen der Erfindung für Reste ausgewählt aus der Gruppe Phenyl, Naphtyl, Phenanthrenyl, Anthracenyl, Fluorenyl, Pyridinyl, Oxazolyl, Thiophenyl, Benzofuranyl, Benzothiophenyl, Dibenzofuranyl, Dibenzothiophenyl, Furanyl, Indolyl, Pyridazinyl, Pyrazinyl, Pyrimidinyl, Triazolyl und Chinolinyl, die weiterhin mit keinem, einem, zwei oder drei Resten pro Cyclus weiter substituiert sein kann, die jeweils unabhängig voneinander ausgewählt sind aus der Gruppe

Fluor, Chlor, Brom, Nitro, Cyano, Di(C₁-C₆-alkyl)-amino, C₁-C₆-Alkyl, Phenyl, Naphtyl, o-, m- oder p-Tolyl, C₁-C₈-Fluoralkyl, O-(C₁-C₁₂-Fluoralkyl), O-(C₁-C₆-Alkyl), -COO-(C₁-C₆)-Alkyl und -CON(C₁-C₆-Alkyl)₂.

Ganz besonders bevorzugt steht Ar im Rahmen der Erfindung für Reste ausgewählt aus der Gruppe Phenyl, Naphtyl, Phenanthrenyl, Anthracenyl, Fluorenyl, die weiterhin mit keinem, einem, zwei oder drei Resten pro Cyclus weiter substituiert sein kann, die jeweils unabhängig voneinander ausgewählt sind aus der Gruppe Fluor, Chlor, Brom, Nitro, Cyano, Dimethylamino, Diethylamino, Phenyl, C₁-C₄-Alkyl, C₁-C₄-Fluoralkyl, O-(C₁-C₄-Fluoralkyl) und O-(C₁-C₄-Alkyl).

Besonders bevorzugt werden für das erfindungsgemäße Verfahren Halogenphosphane der Formeln (IIa) eingesetzt, in denen
- n: gleich zwei ist.

Weiterhin besonders bevorzugt werden für das erfindungsgemäße Verfahren Halogenphosphane der Formeln (IIa) eingesetzt, in denen
- X: für Chlor steht.

Ganz besonders bevorzugt werden für das erfindungsgemäße Verfahren als Halogenphosphane folgende Verbindungen eingesetzt:

Dichlorphenylphosphan, Dichlor-2-methoxyphenyl-phosphan, Dichlor-4-methoxyphenyl-phosphan, Dichlor-2,4-dimethoxyphenyl-phosphan, Dichlor-2,4,6-trimethoxyphenyl-phosphan, Dichlor-2-tolylphosphan, Dichlor-4-tolylphosphan, Dichlor-2,4-xylylphosphan, Dichlor-3,5-xylylphosphan, Dichlor-2,4,6-trimethylphenylphosphan, Dichlor-pentafluorphenylphosphan, Dichlor-3,5-difluorphenylphosphan, Dichlor-2,4-difluorphenylphosphan, Dichlor-4-fluorphenylphosphan, Dichlor-4-chlorphenylphosphan, Dichlor-4-bromphenylphosphan, Dichlor-4-(tert.-butyl)phenylphosphan, Dichlor-2,4,6-tri(tert.-butyl)phenylphosphan, Dichlor-4-(trifluormethyl)phenylphosphan, Dichlor-3,5-bis(trifluormethyl)phenylphosphan, Dichlor-2-biphenyl-phosphan, Dichlor-3-biphenylphosphan, Dichlor-1-naphthylphosphan, Dichlor-2-naphthyl-phosphan, Dichlor-5-acenaphthenylphosphan, Dichlor-9-fluorenylphosphan, Dichlor-9-anthracenylphosphan, Dichlor-9-phenanthrylphosphan, Dichlor-1-pyrenylphosphan.

Im Rahmen der Erfindung steht R¹ bevorzugt für C₁-C₁₂-Alkyl, SiR²₃, CH₂SiR²³ Phenyl, Pyridyl, o-, m- , p-Tolyl, oder Naphthyl wobei die Reste R² jeweils unabhängig voneinander für C₁-C₁₂-Alkyl stehen wobei jeweils die Auflage gilt, dass entweder
- die Reste R¹ über ein sekundäres, tertiäres oder quartäres sp³-Kohlenstoffatom oder ein quartäres Silizium-Atom gebunden sind und im Falle der Bindung über ein sekundäres sp³-Kohlenstoffatom dieses sekundäre sp³-Kohlenstoffatom weiterhin ein quartäres sp³-Kohlenstoff- oder Siliziumatom trägt, das ebenfalls Bestandteil des Restes R² ist oder
- die Reste R¹ ein in den ortho-Positionen einfach oder zweifach substituierter Phenyl, Pyridyl, o- ,m- , p-Tolyl oder Naphthyl sind.

Solche Reste sind beispielsweise und bevorzugt Isopropyl, sec.-Butyl, tert.-Butyl, Trimethylsilyl, 1-Methylbutyl, 1-Ethylpropyl, 1,1-Dimethylpropyl, 1,2-Dimethylpropyl, 1-Methylpentyl, 1,1-Dimethylbutyl, 1,2-Dimethylbutyl, 1,3-Dimethylbutyl, 1-Ethylbutyl, 1,1,2-Trimethylpropyl, 1,2,2-Trimethylpropyl, 1-Ethyl-1-methylpropyl, 2,2-Dimethylpropyl, (Trimethylsilyl)methyl, Cyclopentyl-, Cyclohexyl- und Cycloheptyl sowie

o-Tolyl, 2,6-Dimethylphenyl, 2,4,6-Trimethylphenyl, 2-Isopropylphenyl, 2,4- oder 2,6-Diisopropylphenyl, 2-(tert.-Butyl)phenyl, 2,4-oder 2,6-Di(tert.-butyl)phenyl oder o-Anisyl und 2,4- oder 2,6-Dimethoxyphenyl.

Besonders bevorzugt steht R¹ für iso-Propyl, tert.-Butyl, Cyclohexyl, ortho-Tolyl und ortho-Anisyl, wobei tert.-Butyl noch weiter bevorzugt ist.

Für das erfindungsgemäße Verfahren werden Organomagnesiumverbindungen eingesetzt. Organomagnesiumverbindungen stehen häufig in Lösung im Gleichgewicht mit ihren halogenidreicheren oder -ärmeren Analoga oder mit Lösungsmittel- oder Halogenid-verbrückten di-, oligo-oder polymeren Strukturen (sogenanntes Schlenk Gleichgewicht).

Die Darstellung von Organomagnesiumverbindungen im Form der Formel (IIIa) soll in Bezug auf diese Gleichgewichte keine Beschränkung darstellen, sondern bildet lediglich Organomagnesiumverbindungen in ihrer am häufigsten wiedergegebenen Schreibweise ab.

Organomagnesiumverbindungen wie insbesondere die sogenannten Grignardreagenzien können im Rahmen der Erfindung beispielsweise solche sein, die in situ aus den analogen Halogenverbindungen und Magnesium hergestellt wurden, wobei die Herstellung gegebenenfalls unter Einsatz stöchiometrischer oder katalytischer Mengen von Hilfs- und Zusatzstoffen erfolgen kann.

Zu diesen Hilfs- und Zusatzstoffen zählen weitere Grignard-Reagenzien und Alkylhalogenide wie 1,2-Dibromethan, koordinierende Zusätze zum Lösungsmittel wie Triethylamin oder N,N,N',N'-Tetramethyl-1,2-ethylendiamin oder Metallsalze wie Eisen(II)chlorid.

Die verwendeten Organomagnesiumverbindungen können vorteilhafterweise in Form von Lösungen eingesetzt werden, die teilweise kommerziell verfügbar sind.

Weiterhin kann der Reaktionsmischung auch Lösungsmittel zugegeben werden.

Als Lösungsmittel werden aprotische Lösungsmittel eingesetzt.

Bevorzugte aprotische Lösungsmittel sind Ether, wie z.B. Diethylether, tert.-Butylmethylether, Dioxan, Tetrahydrofuran, Tetrahydropyran, 1,1-Dimethoxymethan, 1,2-Dimethoxyethan, Diethylenglykoldimethylether, Tetraethylenglykoldimethylether, aliphatische Kohlenwasserstoffe wie beispielsweise Pentan, Hexan, Heptan, Octan und längerkettige unverzweigte oder verzweigte aliphatische Kohlenwasserstoffe, Cyclohexan, Methylcyclohexan, Petrolether mit verschiedenen Siedebereichen und Paraffinöle, aromatische Kohlenwasserstoffe wie beispielsweise Benzol, Toluol, o-, m- oder p-Xylol und Mesitylen und aromatische Chlorkohlenwasserstoffe wie Chlorbenzol oder die isomeren Chlortoluole sowie Mischungen solcher Lösungsmittel.

Besonders bevorzugte Lösungsmittel sind Diethylether, Tetrahydrofuran, Toluol, Hexan, Heptan oder Mischungen davon.

In einer bevorzugten Ausführungsform des erfindungsgemäßen Verfahrens wird der Volumenanteil an aromatischen oder aliphatischen Kohlenwasserstoffen so gewählt dass er im Bezug auf das gesamte Reaktionsgemisch 10 % oder mehr, bevorzugt 25 % oder mehr beträgt.

In Anbetracht der Hydrolyseempfindlichkeit von Organomagnesiumverbindungen ist der Einsatz getrockneter Lösungsmittel vorteilhaft.

Bei Lösungsmitteln die mit Wasser ein niedriger siedendes Azeotrop bilden, hat es sich in der Praxis als ausreichend erwiesen, zur Trocknung eine azeotrope Destillation durchzuführen.

Weitere Trocknungsmöglichkeiten sind dem Fachmann hinlänglich bekannt.

Die Menge des gegebenenfalls eingesetzten Lösungsmittels kann beispielsweise 50 ml bis 5000 ml, bevorzugt 300 bis 1000 ml pro Mol der Verbindungen der allgemeinen Formeln (IIa) sein.

Die Menge der eingesetzten Organomagnesiumverbindung kann beispielsweise das 0,2 bis 10-fache, bezogen auf die molare Menge der zu substituierenden Halogenatome in den Halogenphosphanen der Formel (IIa) sein, das 0,5- bis 5-fache ist bevorzugt, das 1- bis 2-fache ist ganz besonders bevorzugt. Noch weiter bevorzugt ist das 1,05- bis 1,5-fache.

Für das erfindungsgemäße Verfahren wird Kupfer(I)bromid-Dimethylsulfid-Komplex eingesetzt.

Für das erfindungsgemäße Verfahren kann das molare Verhältnis von auszutauschendem X in Verbindungen der Formel (Ia) zu Kupfer beispielsweise 5 bis 2000 betragen, bevorzugt ist ein Verhältnis von 10 bis 500, ganz besonders bevorzugt 50 bis 200.

Das erfindungsgemäße Verfahren wird in einer bevorzugten Ausführungsform in Gegenwart mindestens eines, bevorzugt eines Salzes, durchgeführt.

Als Salze sind für das erfindungsgemäße Verfahren beispielsweise und bevorzugt Salze der allgemeinen Formel (VII) geeignet,

(Kation⁺)(Anion⁻) (VII)

in der

(Kation⁺) für substituierte Ammonium, Phosphonium oder Arsonium-Kationen oder Alkalietallionen und

(Anion⁻) für das Anion einer organischen oder anorganischen Säure steht.

Bevorzugt steht (Kation⁺) für Alkalimetallkationen und für Kationen der Formel (VIII)

[Pnyc(C₁-C₁₂-Alkyl)m(C₇-C₁₂-Arylalkyl)q(C₆-C₁₀-Aryl)ᵣ]⁺ (VIII)

in der

Pnyc für Stickstoff oder Phosphor steht und
(m+q+r) = 4 ergibt.

Besonders bevorzugt steht (Kation⁺) für Lithium, Tetraphenylphosphonium, Tetrabutylammonium, Tetrabutylphosphonium und Tributyldodecylphosphonium.

Bevorzugt steht (Anion⁻) für Fluorid, Chlorid, Bromid, Iodid, Cyanat, Thiocyanat, Acetat, Hydroxid, Nitrat, Hydrogensulfat, Tetrafluoroborat, Hexafluorophosphat, Tosylat, und Triflat, besonders bevorzugt für Chlorid, Bromid, Iodid.

Ganz besonders bevorzugte Salze sind Tetrabutylphosphoniumchlorid, Tetrabutylphosphoniumbromid, Tetraphenylphosphoniumchlorid, Tributyldodecylphosphoniumchlorid, Lithiumhlorid, Lithiumbromid und Lithiumiodid oder Mischungen davon.

Noch weiter bevorzugt ist Lithiumbromid.

Das molare Verhältnis von Salz zu Kupfer in der Reaktionsmischung kann beispielsweise 0,05:1 bis 10:1 betragen, 0,5:1 bis 10:1 1 ist bevorzugt, besonders bevorzugt ist 1:1 bis 4:1.

Die Reaktionstemperatur kann zum Beispiel -60°C bis 70°C, bevorzugt -20°C bis 70°C und besonders bevorzugt -10°C bis 50°C betragen.

Der Reaktionsdruck ist unkritisch und kann beispielsweise bei 0,2 bis 100 bar betragen, bevorzugt ist Umgebungsdruck.

Die Reaktionsdauer kann beispielsweise 5 Minuten bis 24 Stunden betragen, 30 Minuten bis 240 Minuten sind bevorzugt.

Die Reaktion und Aufarbeitung werden bevorzugt unter Schutzgas unter weitgehendem Ausschluss von Sauerstoff und Feuchtigkeit durchgeführt. Weitgehender Ausschluss von Sauerstoff bedeutet beispielsweise einen Gehalt an Sauerstoff im Schutzgas von 1 % oder weniger, bevorzugt 0,5 % oder weniger. Als Schutzgase kommen beispielsweise Stickstoff und Edelgase wie beispielsweise Argon oder Mischungen solcher Gase in Frage.

In einer Ausführungsform des erfindungsgemäßen Verfahrens legt man die Kupferverbindung und das Salz zusammen mit dem Lösungsmittel und dem Halogenphosphan in einem Reaktionsgefäß unter Schutzgas vor und bringt den Ansatz unter Rühren auf die Reaktionstemperatur. Anschließend dosiert man die Organomagnesiumverbindung unter Kontrolle der Reaktionstemperatur langsam zu. Gegebenenfalls kann gekühlt werden. Nach beendeter Zugabe lässt man die Reaktionsmischung auf Raumtemperatur kommen und rührt bis zum Ende der Reaktionszeit nach. Dann kann mit Ammoniumchlorid-Lösung hydrolysiert werden. Nach Phasentrennung wäscht man die organische Phase mehrmals mit wässriger Ammoniak-Lösung und anschließend mit Wasser. Dann wird die organische Phase getrocknet (z.B. über MgSO₄) und anschließend vom Lösungsmittel befreit.

Falls notwendig, werden ausreichend flüchtige Produkte anschließend destilliert, während feste Produkte gegebenenfalls z.B. durch Umkristallisieren oder Umfällen weiter gereinigt werden können.

Die Aufarbeitung beinhaltet die Ausfällung des entstandenen Phosphans mit einer starken Säure zu einem Phosphoniumsalz, insbesondere solchen, die in der organischen Phase nicht nennenswert löslich sind. Dafür sind Tetrafluoroborsäure either Hexafluorophosphorsäure, bevorzugt geeignet

Die genannten Säuren sind jeweils auch in Form wässriger Lösungen verwendbar.

Insbesondere ist eine wässrige Lösung von Tetrafluoroborsäure geeignet. Der Feststoff kann isoliert und gereinigt werden. Anschließend kann durch Reextraktion in eine organische Phase nach Neutralisation der Säure mit Base das freie Phosphan gewonnen werden und gegebenenfalls durch Destillation oder Kristallisation weiter aufgereinigt werden oder das Phosphoniumsalz gelagert oder für weitere Umsetzungen verwendet werden.

Für alle eingesetzten flüssigen Medien ist es wegen der Oxidationsempfindlichkeit von Phosphanen vorteilhaft, sie durch Entgasen von Sauerstoff weitgehend zu befreien.

Auf erfindungsgemäße Weise werden Phosphane der Formel (Ia) erhalten

PR¹ₙAr₍₃₋ₙ₎ (Ia)

oder die analogen Phosphonium-tetrafluoroborate oder -hexafluorophosphate,
wobei
R¹, Ar, n die vorstehend beschriebenen Bedeutungen und Vorzugsbereiche besitzen.

Das erfindungsgemäße Verfahren eignet sich insbesondere für die Herstellung von Aryldialkylphosphanen der allgemeinen Formel (IX)

Ar-PR¹₂ (IX)

in der
Ar die unter der allgemeinen Formel (Ia) und
R¹ die unter der Formel (Ia) angegebene Bedeutung und deren Vorzugsbereiche besitzt sowie für deren oben zitierten Phosphoniumsalze.

Das erfindungsgemäße Verfahren eignet sich besonders bevorzugt zur Herstellung von:

Di-(tert.-butyl)phenylphosphan, Di(1-methylbutyl)phenylphosphan, Di(1,1-dimethylpropyl)phe-nylphosphan, Di(1,1-dimethylbutyl)phenylphosphan, Di-(tert.-butyl)-2-methoxyphenylphosphan, Di(1-methylbutyl)-2-methoxyphenylphosphan, Di(1,1-dimethylpropyl)-2-methoxyphenylphosphan, Di(1,1-dimethylbutyl)-2-methoxyphenylphosphan, Bis(trimethylsilyl)-2-methoxyphenylphosphan, Di-(tert.-butyl)-4-methoxyphenylphosphan, Di(1-methylbutyl)-4-methoxyphenylphosphan, Di(1,1-dimethylpropyl)-4-methoxyphenylphosphan, Di(1,1-dimethylbutyl)-4-methoxyphenylphosphan, Di-(tert.-butyl)-2,4-dimethoxyphenylphosphan, Di(1-methylbutyl)-2,4-dimethoxyphenylphosphan, Di(1,1-dimethylpropyl)-2,4-di-methoxyphenylphosphan, Di(1,1-dimethylbutyl)-2,4-dimethoxy-henylphosphan, Di-(tert.-butyl)-2,4,6-trimethoxyphenylphosphan, Di(1-methylbutyl)-2,4,6-tri-ethoxy-phenylphosphan, Di(1,1-dimethylpropyl)-2,4,6-trimethoxy-phenylphosphan, Di(1,1-dimethylbutyl)-2,4,6-trimethoxyphenylphosphan, Di-(tert.-butyl)-2-methylphenyl-phosphan, Di(1-methylbutyl)-2-methylphenylphosphan, Di(1,1-dimethylpropyl)-2-methylphenylphosphan, Di(1,1-dimethylbutyl)-2-methylphenylphosphan, Di-(tert.-butyl)-4-methylphenylphosphan, Di(1-methylbutyl)-4-methylphenylphosphan, Di(1,1-dimethylpropyl)-4-methylphenylphosphan, Di(1,1-dimethylbutyl)-4-methyl-phenylphosphan, Di-(tert.-butyl)-2,4-dimethylphenylphosphan, Di(1-methylbutyl)-2,4-dimethylphenylphosphan, Di(1,1-dimethylpropyl)-2,4-dimethyl-phenylphosphan, Di(1,1-dimethylbutyl)-2,4-dimethylphenylphosphan, Di-(tert.-butyl)-2,4,6-trimethyl-phenyl-phosphan, Di(1-methylbutyl)-2,4,6-trimethylphenylphosphan, Di(1,1-dimethylpropyl)-2,4,6-trime-thylphenylphosphan, Di(1,1-dimethylbutyl)-2,4,6-tri-methyl-phenylphosphan, Di-(tert.-butyl)-pentafluorphenylphosphan, Di(1-methylbutyl)-pentafluorphenylphosphan, Di(1,1-dimethylpropyl)-pentafluorphenyl-phosphan, Di(1,1-dimethylbutyl)-pentafluorphenylphosphan, Di-(tert.-butyl)-2,4-difluorophenylphosphan, Di(1-methylbutyl)-2,4-difluorophenylphosphan, Di(1,1-dimethylpropyl)-2,4-difluorophenylphosphan, Di(1,1-dimethylbutyl)-2,4-difluoro-phenylphosphan, Di-(tert.-butyl)-3,5-difluorophenylphosphan, Di(1-methylbutyl)-3,5-difluorophenylphosphan, Di(1,1-dimethylpropyl)-3,5-difluorophenylphosphan, Di(1,1-dimethylbutyl)-3,5-difluorophenylphosphan, Di-(tert.-butyl)-4-fluorophenyl-phosphan, Di(1-methylbutyl)-4-fluorophenylphosphan, Di(1,1-dimethylpropyl)-4-fluorophenylphosphan, Di(1,1-dimethylbutyl)-4-fluorophenylphosphan, Di(1,2-dimethylbutyl)-4-fluorophenylphosphan, Di-(tert.-butyl)-4-chlorophenylphosphan, Di(1-methylbutyl)-4-chlorophenylphosphan, Di(1,1-dimethylpropyl)-4-chlorophenylphosphan, Di(1,1-dimethylbutyl)-4-chlorophenylphosphan, Di-(tert.-butyl)-4-bromophenylphosphan, Di(1-methylbutyl)-4-bromophe-nylphosphan, Di(1,1-dimethylpropyl)-4-bromophenylphosphan, Di(1,1-dimethylbutyl)-4-bromo-phenylphosphan, Di-(tert.-butyl)-4-(tert.-butyl)phenylphosphan, Di(1-methylbutyl)-4-(tert.-butyl)phenylphosphan, Di(1,1-dimethylpropyl)-4-(tert.-butyl)phenyl-phosphan, Di(1,1-dimethylbutyl)-4-(tert.-butyl)phenylphosphan, Bis(trimethylsilyl)-4-(tert.-butyl)phenylphosphan, Di-(tert.-butyl)-2,4,6-tri(tert.-butyl)phenylphosphan, Di(1-methylbutyl)-2,4,6-tri(tert.-butyl)phenylphosphan, Di(1,1-dimethylpropyl)-2,4,6-tri(tert.-butyl)phenylphosphan, Di(1,1-dimethylbutyl)-2,4,6-tri(tert.-butyl)phenylphosphan, Di-(tert.-butyl)-4-trifluormethylphenylphosphan, Di(1-methylbutyl)-4-trifluormethylphenylphosphan, Di(1,1-dimethylpropyl)-4-trifluor-methylphenylphosphan, Di(1,1-dimethylbutyl)-4-trifluormethylphenylphosphan, Di-(tert.-butyl)-3,5-bis(trifluormethyl)phenylphosphan, Di(1-methylbutyl)-3,5-bis(tri-fluormethyl)phenylphosphan, Di(1,1-dimethylpropyl)-3,5-bis(trifluor-methyl)-phenylphosphan, Di(1,1-dimethylbutyl)-3,5-bis-(trifluormethyl)-phenyl-phosphan, Di-(tert.-butyl)-2-biphenylphosphan, Di(1-methylbutyl)-2-biphenylphosphan, Di(1,1-dimethylpropyl)-2-biphenylphosphan, Di(1,1-dimethylbutyl)-2-biphenylphosphan, Di(1,2-dimethylbutyl)-2-biphenylphosphan, Bis(trimethylsilyl)-2-biphenylphosphan, Di-(tert.-butyl)-3-biphenylphosphan, Di(1-methylbutyl)-3-biphenylphosphan, Di(1,1-dimethylpropyl)-3-biphenylphosphan, Di(1,1-dimethylbutyl)-3-biphenylphosphan, Di-(tert.-butyl)-1-naphthylphosphan, Di(1-methylbutyl)-1-naphthylphosphan, Di(1,1-dimethylpropyl)-1-naphthylphosphan, Di(1,1-dimethylbutyl)-1-naphthylphosphan, Di-(tert.-butyl)-2-naphthylphosphan, Di(1-methylbutyl)-2-naphthylphosphan, Di(1,1-dimethylpropyl)-2-naphthylphosphan, Di(1,1-dimethylbutyl)-2-naphthylphosphan. . Weiterhin eignet sich das erfindungsgemäße Verfahren insbesondere zur Herstellung von Di-(tert.-butyl)phenylphosphonium-tetrafluoroborat, und Di-(tert.-butyl)phenylphosphonium-hexafluorophosphat . Die genannten Phosphoniumsalze sind bislang unbekannt und eignen sich aufgrund ihrer hervorragenden Lagerstabilität und der geringen Oxidationsempfindlichkeit besonders für den Einsatz in katalytischen Prozessen, wobei die freien Phosphane durch Zusatz einer Base freigesetzt werden.

Die erfindungsgemäß herstellbaren Phosphane eignen sich zur Anwendung als Liganden in katalytischen Reaktionen, insbesondere in homogen-übergangsmetallkatalysierten Reaktionen wie z.B. C-C-Kupplungsreaktionen, C-N-Kupplungsreaktionen, C-O-Kupplungsreaktionen, C-S-Kupplungsreaktionen, Olefin-Hydrierungen, Olefin-Hydroformylierungen, C-C-Doppelbindungs-Isomerisierungen, Hydrosilylierungen oder Allylalkylierungen. Weiterhin lassen sie sich auch für metallfreie katalytische Reaktionen verwenden, wie z.B. für die Oligomerisierung von Isocyanaten.

Ganz besonders eignen sich die erfindungsgemäß herstellbaren Phosphane für katalytische C-C-Kupplungsreaktionen wie der Kupplungen von Halogenverbindungen mit Organomagnesium, Organozinn-, Organozink- oder Organoborverbindungen, Olefinen oder Alkinen, sowie für C-N-Verknüpfungen wie die Arylaminierung, C-S-Verknüpfungen und C-O-Verknüpfungen.

Analog zu den Phosphanen können vorteilhaft auch die entsprechenden Phosphoniumsalze eingesetzt werden, wenn unter Zusatz einer Base gearbeitet wird.

Das trifft insbesondere für Di-(tert.-butyl)phenylphosphonium-tetrafluoroborat, Di-(tert.-butyl)phenylphosphonium-hexafluorophosphat. zu.

Der Vorteil des erfindungsgemäßen Verfahrens liegt in der leichten Durchführbarkeit, den hohen Ausbeuten und ausgezeichneten Selektivitäten an tertiären Phosphanen. Weiterhin kann das Verfahren in aliphatischen und aromatischen Lösungsmitteln durchgeführt werden, was für eine technische Anwendung vorteilhaft ist. Zudem gelingt die Reaktion bei Temperaturen, die im Rahmen der technischen Umsetzung ohne erheblichen Aufwand erreicht werden können. Weiterhin zeichnet sich das erfindungsgemäße Verfahren dadurch aus, dass es mit geringen Mengen an Katalysator ausgezeichnete Ausbeuten und Selektivitäten zulässt.

### Beispiele:

### Beispiel 1 (nicht erfindungsgemäß):

### Versuch zur Herstellung von Di(tert.-butyl)phenylphosphan ohne Katalysator in Hexan

In einem Reaktionsgefäß werden 0,4 ml Dichlorphenylphosphan und 3 ml Hexan vorgelegt. Anschließend wird tert.-Butylmagnesiumchlorid in Diethylether langsam unter leichter Kühlung zugetropft und anschließend bei Raumtemperatur gerührt. Nach Abtrennung des ausgefallenen Niederschlags wird der Reaktionsverlauf durch Aufnahme eines ³¹P-NNM-Spektrums verfolgt. Der Gang der Reaktion ist in Tabelle 1 dargestellt.

**Tabelle 1**

| **Reaktionsdauer [h]** | **Mol-%** **CIPPh(tert.-Butyl)** | **Mol-%** **[PPh(t-Butyl)]₂** | **Mol-%** **PPh(tert.-Butyl)₂** |
|---|---|---|---|
| 1 | 83 | 14 | 1,3 |
| 5 | 49 | 41 | 1,3 |
| 25 | 15 | 71 | 2,1 |

Aus Tabelle 1 ist zu erkennen, dass das Wunschprodukt Di(tert.-butyl)phenylphosphan nur in sehr kleinem Anteil entsteht, während das Edukt sich überwiegend zum unerwünschten 1,2-Di(tert.-butyl)-1,2-diphenylphosphan reagiert.

### Beispiel 2 (nicht erfindungsgemäß):

### Versuch zur Herstellung von Di(tert.-butyl)phenylphosphan ohne Katalysator in Ether

In einem Reaktionsgefäß werden 0,4 ml Dichlorphenylphosphan und 3 ml Diethylether vorgelegt. Anschließend wird tert.-Butylmagnesiumchlorid in Diethylether langsam unter leichter Kühlung zugetropft und anschließend bei Raumtemperatur gerührt. Nach Abtrennung des ausgefallenen Niederschlags wird der Reaktionsverlauf durch Aufnahme eines ³¹P-NMR-Spektrums verfolgt. Der Gang der Reaktion ist in Tabelle 1 dargestellt.

**Tabelle 2**

| **Reaktions-dauer [h]** | **Mol-%** **ClPPh(tert.-Butyl)** | **Mol-%** **[PPh(t-Butyl)]₂** | **Mol-%** **PPh(tert.-Butyl)₂** |
|---|---|---|---|
| 1 | 76 | 18 | - |
| 5 | 48 | 41 | 1,5 |
| 25 | 12 | 70 | 2,2 |

Aus Tabelle 2 ist zu erkennen, dass das Wunschprodukt Di(tert.-butyl)phenylphosphan nur in sehr kleinem Anteil entsteht, während das Edukt sich überwiegend zum unerwünschten 1,2-Di(tert.-butyl)-1,2-diphenylphosphan reagiert.

### Beispiel 3: (nicht erfindungsgemäß)

### Erfindungsgemäße Synthese von Di(tert.-butyl)phenylphosphan

In einen Rundkolben mit Rückflusskühler, Thermometer, Rührer und Tropftrichter werden 5,1 g Kupfer(I)iodid und 4,6 g Lithiumbromid eingewogen und unter Schutzgasatmosphäre gesetzt. Anschließend werden 75 ml Hexan zugegeben, dann 36,2 ml Dichlorphenylphosphan zugetropft. Anschließend werden nochmal 110 ml Hexan zugegeben und eine halbe Stunde bei Raumtemperatur gerührt. Anschließend wird auf -20°C gekühlt und 400 ml einer 2 M Lösung von tert.-Butylmagnesiumchlorid in Diethylether so schnell zugetropft, dass dabei kein merklicher Temperaturanstieg auftritt. Anschließend wird eine Stunde bei dieser Temperatur weitergerührt, dann langsam auf Raumtemperatur gebracht und zwei Stunden nachgerührt. Anschließend wird mit 110 ml Ammoniumchloridlösung hydrolysiert, dann die Phasen getrennt und die organische Phase dreimal mit konz. Ammoniaklösung, dann einmal mit Wasser gewaschen. Darauf wird die organische Phase über MgSO₄ getrocknet und vom Lösungsmittel befreit. Der flüssige Rückstand wird destilliert und liefert 41,8 g (71 % d. Th.) des gewünschten Produkts in einer Reinheit von > 99,4 %.

### Beispiele 4 bis 10: (nicht erfindungsgemäß)

### Abhängigkeit der Reaktion von der Katalysatorkonzentration

In einen Rundkolben mit Rührer werden Kupfer(I)iodid und Lithiumbromid eingewogen, dann unter Schutzgas gesetzt, mit Lösungsmittel Hexan und Dichlorphenylphosphan versetzt. Dann wird unter Rühren die 2M tert-Butylmagnesiumchlorid-Lösung (in Diethylether) bei Raumtemperatur langsam zugetropft. Anschließend wird 30 Minuten weitergerührt und die Ausbeute des tertiären Phosphans durch Aufnahme eines ³¹P-NMR-Spektrums bestimmt.

Die Ergebnisse unter Variation der Katalysatorenkonzentration sind in Tabelle 3 dargestellt.

**Tabelle 3**

| **Beispiel** | **Cl2PPh** | **Grignard- Lösung [ml]** | **Hexan** | **Cu(I)I** | **LiBr** | **Cu-Gehalt¹** | **Reaktionszeit** | **Ausbeute [%]** |
|---|---|---|---|---|---|---|---|---|
| | **[ml]** | | **[ml]** | **[mg]** | **[mg]** | **[Mol %]** | **[min]** | |
| 4 | 0,3 | 3,31 | 4,5 | 42,1 | 38,4 | 10 | 30 | 94,6 |
| 5 | 0,6 | 6,63 | 9 | 42,1 | 38,4 | 5 | 30 | 94,5 |
| 6 | 1,2 | 13,3 | 18 | 33,7 | 30,7 | 2 | 30 | 91 |
| 7 | 3,0 | 33,2 | 44 | 42,1 | 38,4 | 1 | 30 | 92,3 |
| 8 | 4,5 | 49,7 | 67 | 31,6 | 28,8 | 0,5 | 210 | 61 |
| 9 | 2,71 | 30,0 | 26 | 41,12 | 34,7 | 1 | 60 | 88 |
| 10 | 4,07 | 45 | 59 | 31,02 | 26,0 | 0,5 | 120 | 90 |

| | | | | | | | | |
|---|---|---|---|---|---|---|---|---|
| ¹bezogen auf den Phosphorgehalt ² unter Verwendung von Kupfer(I)bromid-Dimethylsulfid-Komplex | | | | | | | | |

### Beispiele 11 bis 17 (nicht erfindungsgemäß)

### Abhängigkeit der Reaktion von der Temperatur

In ein Reaktionsgefäß mit Rührer werden Kupfer(I)iodid und Lithiumbromid eingewogen, dann unter Schutzgas gesetzt, mit Lösungsmittel Hexan und Dichlorphenylphosphan versetzt. Dann wird unter Rühren die 2M tert-Butylmagnesiumchlorid-Lösung (in Diethylether) bei der gewählten Temperatur so langsam zugetropft, dass ein deutlicher Anstieg der Reaktionstemperatur unterbleibt (in der Regel im Verlauf von 20 min). Anschließend wird das Temperierbad entfernt und weitergerührt bis die Ansätze wieder Raumtemperatur erreicht haben. Dann wird noch 1,5 Stunden weitergerührt und die Ausbeute des tertiären Phosphans durch Aufnahme eines ³¹P-NMR-Spektrums bestimmt.

Die Ergebnisse unter Variation der Reaktionstemperatur sind in Tabelle 4 dargestellt.

**Tabelle 4**

| **Beispiel** | **Cl₂PPh** | **Grignard- Lösung [ml]** | **Hexan** | **Cu(I)I** | **LiBr** | **Cu-Gehalt¹** | **Temperatur** | **Ausbeute** |
|---|---|---|---|---|---|---|---|---|
| | **[ml]** | | **[ml]** | **[mg]** | **[mg]** | **[mol%]** | **[°C]** | **[%]** |
| 11 | 0,275 | 3,0 | 4 | 38,6 | 35,2 | 10 | -40 | 95,6 |
| 12 | 0,275 | 3,0 | 4 | 38,6 | 35,2 | 10 | -20 | 95,8 |
| 13 | 0,275 | 3,0 | 4 | 38,6 | 35,2 | 10 | -10 | 94,8 |
| 14 | 0,275 | 3,0 | 4 | 38,6 | 35,2 | 10 | 0 | 94,9 |
| 15 | 1,35 | 14,9 | 20 | 189,5 | 172,8 | 10 | 50 | 94,3 |
| 17 | 2,71 | 30 | 26 | 38,1 | 34,7 | 1 | 40 | 85,9 |

| | | | | | | | | |
|---|---|---|---|---|---|---|---|---|
| ¹bezogen auf den Phosphorgehalt | | | | | | | | |

### Beispiele 18 bis 20 (nicht erfindungsgemäß)

### Verwendung verschiedener Lösungsmittel

In ein Reaktionsgefäß mit Rührer werden Kupfer(I)iodid und Lithiumbromid eingewogen, dann unter Schutzgas gesetzt, mit Lösungsmittel und Dichlorphenylphosphan versetzt. Dann wird unter Rühren die 2M tert-Butylmagnesiumchlorid-Lösung (in Diethylether) bei Raumtemperatur so langsam zugetropft, dass eine übermäßige Erwärmung ausgeschlossen bleibt. Anschließend wird 30 Minuten weitergerührt und die Ausbeute des tertiären Phosphans durch Aufnahme eines ³¹P-NMR-Spektrums bestimmt.

Die Ergebnisse unter Variation des Lösungsmittels sind in Tabelle 5 dargestellt.

**Tabelle 5**

| **Beispiel** | **Cl₂PPh [ml]** | **Grignard-Lösung [ml]** | **Lösungsmittel (3 ml)** | **Cu(I)I [mg]** | **LiBr [mg]** | **Ausbeute [%]** |
|---|---|---|---|---|---|---|
| 18 | 0,204 | 2,25 | Hexan | 29 | 26 | 98,7 |
| 19 | 0,204 | 2,25 | Toluol | 29 | 26 | 93,1 |
| 20 | 0,204 | 2,25 | Dioxan | 29 | 26 | 91,7 |

### Beispiel 25: Synthese von Tri(tert.-butyl)phosphan (nicht erfindungsgemäß)

In einen Kolben mit Thermometer, Rückflusskühler und Tropftrichter werden 1,09 g Kupfer(I)-iodid und 1,00 g Lithiumbromid eingewogen und unter Schutzgas gesetzt. Anschließend werden 55 ml Hexan, dann 5 ml Phosphortrichlorid zugegeben und mit weiteren 55 ml Hexan nachgewaschen. Anschließend wird auf -20°C gekühlt und langsam 115 ml 2M tert-Butylmagnesiumchlorid-Lösung (in Diethylether) zugetropft. Anschließend wird 1 Stunde bei -20°C und 3 Stunden bei Raumtemperatur weitergerührt.

Zur Aufarbeitung wird mit 70 ml sat. NH₄Cl-Lösung hydrolysiert und anschließend die organische Phase abgetrennt. Diese wird 2 mal mit je 30 ml konz. Ammoniaklösung und einmal mit Wasser gewaschen. Die organische Phase wird mit Magnesiumsulfat getrocknet und anschließend eingeengt und destilliert. Ausbeute 10,23 g (88,3 % d. Th.) farblose, Flüssigkeit, die in der Vorlage erstarrt.

### Beispiel 26: Synthese von Trineopentylphosphan (nicht erfindungsgemäß)

In einen Kolben mit Thermometer, Rückflusskühler und Tropftrichter werden 0,70 g Kupfer(I)-iodid und 0,64 g Lithiumbromid eingewogen und unter Schutzgas gesetzt. Anschließend werden 50 ml Hexan, dann 3,2 ml Phosphortrichlorid zugegeben und mit weiteren 25 ml Hexan nachgewaschen. Anschließend wird auf -20°C gekühlt und langsam 90 ml 1,27 M Neopentylmagnesiumchlorid-Lösung (in Diethylether) zugetropft. Anschließend wird 1 Stunde bei -20°C und 3 Stunden bei Raumtemperatur weitergerührt. Das ³¹P-NMR zeigt eine Ausbeute von 75,4 % Tri(neopentyl)-phosphan an.

Zur Aufarbeitung wird mit 30 ml sat. NH₄Cl-Lösung hydrolysiert und anschließend die organische Phase abgetrennt. Diese wird 2 mal mit je 20 ml konz. Ammoniaklösung und einmal mit Wasser gewaschen. Die organische Phase wird mit Magnesiumsulfat getrocknet und anschließend eingeengt. Der verbleibende ölige Rückstand wird 2 mal aus Methanol umkristallisiert und ergibt 3,1 g (34,6 % d. Th.) farblose Nadeln.

### Beispiel 27: Synthese von Di(tert.-butyl)phenylphosphonium-tetrafluoroborat

In einem Rundkolben werden 60,6 mg Kupfer(I)bromid-Dimethylsulfid-Komplex und 51,2 mg Lithiumbromid unter Schutzgas vorgelegt. Anschließend werden 20 ml Hexan, 4 ml Dichlorphenylphosphan und nochmals 19 ml Hexan zugegeben. Die Reaktionslösung wird auf 0°C gekühlt. Dann tropft man 32,4 ml einer 2 M Lösung von tert.-Butylmagnesiumchlorid in Ether langsam zu. Anschließend lässt man langsam auf Raumtemperatur kommen und rührt zwei weitere Stunden bei Raumtemperatur.

Zur Aufarbeitung wird der Ansatz vorsichtig mit 75 ml entgaster 2 M HBF₄ versetzt. Dann werden zusätzlich weitere 5 ml 8 M HBF₄ zugesetzt und 15 min gerührt. Dann wird abgesaugt und der Filterkuchen mit etwas kaltem Wasser gewaschen. Der Rückstand wird am Vakuum bis zur Gewichtskonstanz getrocknet. Ausbeute: 7,9 g (86 % d. Theorie) Reinheit > 99%.
¹H-NMR (CDCl₃, ppm): 7,9 (m, breit); 7,80 (t); 7,69 (2H, td); 6,92 (d, 485 Hz); 1,53 (d, 17 Hz,); ³¹P-NMR (CDCl₃, ppm): 44,93 (s)

### Beispiel 28: Synthese von Di-(tert.-butyl) phenyl phosphonium-hexafluorophosphat

Analog zu Beispiel 27, jedoch wurde zur Aufarbeitung mit 19 ml entgaster 65 %iger Hexafluorophosphorsäure versetzt, die auf eine Konzentration von 2 M verdünnt wurde. Dann wird für ca. 15 min kräftig gerührt. Dann wird abgesaugt und der Filterkuchen mit etwas kaltem Wasser gewaschen. Der Rückstand wird am Vakuum bis zur Gewichtskonstanz getrocknet. Ausbeute: 8,6 g (79 % d. Theorie) Reinheit > 99%. ¹H-NMR (CDCl₃, ppm): 7,9 (m, breit); 7,81 (t); 7,69 (2H, td); 6,807 (d, 483 Hz); 1,53 (d, 17 Hz); ³¹P-NMR (CDCl₃, ppm): 45,35 (s); -143,63 (hept., 714 Hz)

### Beispiel 29: Synthese von Di-(tert.-butyl) phenylphosphonium-hydrogenhexafluorotitanat (nicht erfindungsgemäß)

Analog zu Beispiel 27, jedoch wurde zur Aufarbeitung mit 24 ml entgaster 60 %iger Hexafluorotitansäure versetzt. Dann wird für ca. 15 min kräftig gerührt, die Phasen getrennt und die wässrige Phase mit Methylenchlorid extrahiert. Die Methylenchlorid-Phase wird anschließend über Magnesiumsulfat getrocknet. Nach dem Abdestillieren des Lösungsmittels verbleibt das Produkt als farbloser Rückstand, der im Vakuum getrocknet wird. Ausbeute: 2,4 g, entspricht 21 % der Theorie.
¹H-NMR (CDCl₃, ppm): 7,84(m, breit); 7,73 (t, breit); 7,61 (m, breit); 6,85 (d, J=483,5 Hz); 1,46 (d, 17,2 Hz)
³¹P-NMR (CDCl₃, ppm): 45,11 (s)

### Beispiel 30:

### Darstellung von Di-(tert.-butyl) phenylphosphonium-hydrogenhexafluorozirkonat (nicht erfindungsgemäß)

Analog zu Beispiel 27, jedoch wurde zur Aufarbeitung mit 25 ml entgaster 45 %iger Hexafluorozirkonsäure versetzt. Dann wird für ca. 15 min kräftig gerührt, die Phasen getrennt und die wässrige Phase mit Methylenchlorid extrahiert. Die Methylenchlorid-Phase wird anschließend über Magnesiumsulfat getrocknet. Nach dem Abdestillieren des Lösungsmittels verbleibt das Produkt als farbloser Rückstand, der im Vakuum getrocknet wird. Ausbeute: 3,67 g, entspricht 29 % der Theorie.
¹H-NMR (CDCl₃, ppm): 7,82 (m, breit); 7,73 (t, breit); 7,61 (dt), 6,741 (d, J= 387 Hz); 1,46 ppm (d, 17,2 Hz)
³¹P-NMR(CDCl3, ppm): 44,979 (s)

## Patentansprüche

1. Verfahren zur Herstellung von tertiären Phosphanen der Formel (Ia)
PR¹ₙAr₍₃₋ₙ₎ (Ia)
in der
R¹ jeweils für C₁-C₁₂-Alkyl, SiR²₃, (C₁-C₈-Alkylen)-SiR²₃, C₁-C₁₂-Fluoralkyl, Phenyl, Pyridyl, o-, m- oder p-Tolyl, Naphthyl oder Benzyl, oder steht wobei die Reste
R² jeweils unabhängig voneinander für C₁-C₁₂-Alkyl stehen
und wobei in Formel (Ia)
n für eins oder zwei steht und
Ar für einen substituierten oder unsubstituierten Arylrest steht,
wobei
Halogenphosphane der Formel (IIa)
PXₙAr₍₃₋ₙ₎ (IIa)
in der
n für eins oder zwei steht und
X jeweils unabhängig für Chlor, Brom oder Iod und
in Formel (IIa) Ar die gleiche Bedeutung besitzt, die unter der Formel (Ia) genannt wurde, mit Organomagnesiumverbindungen der Formel (IIIa) umgesetzt werden
(R¹)ₘMg(Y)₍₂₋ₘ₎ (III a)
in der
R¹ die unter der Formel (Ia) genannten Bedeutungen besitzen und
m für eins oder zwei steht und
Y für Chlor, Brom oder Iod steht
wobei die Umsetzung jeweils in Gegenwart von Salz und in Gegenwart von Kupfer(I) bromid-Demethylsulfid-Komplex
durchgeführt wird, **dadurch gekennzeichnet, dass** die tertiären Phosphane in Form der analogen Phosphonium-tetrafluoroborate oder -hexafluorophosphaten, mit Tetrafluoroborsäure oder Hexafluorophosphorsäure, ausgefällt werden und durch Zusatz einen Base freigesetzt werden.

2. Verfahren nach Anspruch 1, **dadurch gekennzeichnet, dass** Salze der Formel (VII) eingesetzt werden,
(Kation+)(Anion-) (VII)
in der
(Kation+) für substituierte Ammonium, Phosphonium oder Arsonium-Kationen oder Alkalimetallionen und
(Anion-) für das Anion einer organischen oder anorganischen Säure steht.

3. Verfahren nach einem oder mehreren der Ansprüche 1 bis 2, **dadurch gekennzeichnet, dass** das molare Verhältnis von Salz zu Kupfer in der Reaktionsmischung 0,05:1 bis 10:1 beträgt.

4. Verfahren nach einem oder mehreren der Ansprüche 1 bis 3, **dadurch gekennzeichnet, dass** die Umsetzung in Gegenwart von Lösungsmittel durchgeführt wird.

5. Verfahren nach Anspruch 4, **dadurch gekennzeichnet, dass** der Volumenanteil an aromatischen oder aliphatischen Kohlenwasserstoffen so gewählt dass er im Bezug auf das gesamte Reaktionsgemisch 10 % oder mehr beträgt.

6. Verfahren nach einem oder mehreren der Ansprüche 1 bis 5, **dadurch gekennzeichnet, dass** Ar steht für carbocyclische aromatische Reste mit 6 bis 24 Gerüstkohlenstoffatomen oder heteroaromatische Reste mit 4 bis 24 Gerüstatomen, wobei keines, ein, zwei oder drei Gerüstatome pro Cyclus, im gesamten Molekül mindestens jedoch ein Gerüstatom Heteroatome sind, die ausgewählt sind aus der Gruppe Stickstoff, Schwefel oder Sauerstoff und
wobei die carbocyclischen aromatischen Reste oder heteroaromatische Reste weiterhin mit bis zu fünf gleichen oder verschiedenen Substituenten pro Cyclus substituiert sein können, die ausgewählt sind aus der Gruppe Fluor, Chlor, Brom, Nitro, Cyano, geschütztes Formyl, C₁-C₁₂-Alkyl, C₁-C₁₂-Fluoralkyl, Phenyl, Pyridyl, o-, m- oder p-Tolyl, Naphthyl, oder Benzyl, -PO-[(C₁-C₈)-Alkyl]₂, -PO-Phenyl, Pyridyl, o- m- oder p-Tolyl oder Naphthyl, -PO-[(C₁-C₈)-Alkyl) Phenyl, Pyridyl, o-, m- oder p-Tolyl oder Naphthyl, Tri(C₁-C₈-alkyl)siloxyl oder Resten der allgemeinen Formel (IV),
A-D-R³ (IV)
in der unabhängig voneinander
A fehlt oder für einen C₁-C₈-Alkylenrest steht und
D für Sauerstoff, Schwefel oder NR₄ steht,
wobei
R⁴ Wasserstoff, C₁-C₈-Alkyl, Benzyl, Phenyl, Pyridyl, o-, m- oder p-Tolyl, oder Naphthyl, oder bedeutet und
R³ für C₁-C₈-Alkyl, Benzyl, C₁-C₈-Halogenalkyl oder Phenyl, Pyridyl, o- , m- oder p-Tolyl oder Naphthyl, oder NR³R⁴ zusammen für einen cyclischen Aminorest steht,
oder Resten der allgemeinen Formeln (Va-d)
A-SOR³ (Va)
A-SO₂-R³ (Vb)
A-CN (Vc)
A-CO₂M (Vd)
in denen A und R³ die oben angegebene Bedeutung besitzen und M ein Alkalimetallion, ein halbes Äquivalent eines Erdalkalimetallions oder ein quartemäres Ammoniumion bedeuten kann.

7. Verfahren nach einem oder mehreren der Ansprüche 1 bis 6, **dadurch gekennzeichnet, dass** R¹ für C₁-C₁₂-Alkyl, SiR²₃, CH₂SiR²₃ oder Phenyl, Pyridyl, o- ,m- oder p-Tolyl, Naphtyl steht, wobei die Reste R² jeweils unabhängig voneinander für C₁-C₁₂-Alkyl stehen wobei jeweils die Auflage gilt, dass entweder
- die Reste R¹ über ein sekundäres, tertiäres oder quartäres sp³-Kohlenstoffatom oder ein quartäres Silizium-Atom gebunden sind und im Falle der Bindung über ein sekundäres sp³-Kohlenstoffatom dieses sekundäre sp³-Kohlenstoffatom weiterhin ein quartäres sp³-Kohlenstoff oder Siliziumatom trägt, das ebenfalls Bestandteil des Restes R² ist.

8. Verfahren nach einem oder mehreren der Ansprüche 1 bis 7, **dadurch gekennzeichnet, dass** Halogenphosphane der Formeln (IIa) eingesetzt werden, in denen X für Chlor steht.

9. Verfahren nach einem oder mehreren der Ansprüche 1 bis 8, **dadurch gekennzeichnet, dass** als Halogenphosphane eingesetzt werden: Dichlorphenylphosphan, Dichlor-2-methoxyphenyl-phosphan, Dichlor-4-methoxyphenyl-phosphan, Dichlor-2,4-dimethoxyphenyl-phosphan, Dichlor-2,4,6-trimethoxyphenyl-phosphan, Dichlor-2-tolylphosphan, Dichlor-4-tolylphosphan, Dichlor-2,4-xylylphosphan, Dichlor-3,5-xylylphosphan, Dichlor-2,4,6-trimethylphenylphosphan, Dichlor-pentafluorphenylphosphan, Dichlor-3,5-difluorphenylphosphan, Dichlor-2,4-difluorphenylphosphan, Dichlor-4-fluorphenylphosphan, Dichlor-4-chlorphenylphosphan, Dichlor-4-bromphenylphosphan, Dichlor-4-(tert.-butyl)phenylphosphan, Dichlor-2,4,6-tri(tert.-butyl)phenylphosphan, Dichlor-4-(trifluormethyl)phenylphosphan, Dichlor-3,5-bis(trifluormethyl)phenylphosphan, Dichlor-2-biphenylphosphan, Dichlor-3-biphenylphosphan, Dichlor-1-naphthylphosphan, Dichlor-2-naphthylphosphan, Dichlor-5-acenaphthenylphosphan, Dichlor-9-fluorenylphosphan, Dichlor-9-anthracenylphosphan, Dichlor-9-phenanthrylphosphan, Dichlor-1-pyrenylphosphan.

10. Verfahren nach einem oder mehreren der Ansprüche 1 bis 9, **dadurch gekennzeichnet, dass** die Menge der eingesetzten Organomagnesiumverbindung das 0,2 bis 10-fache, bezogen auf die molare Menge der zu substituierenden Halogenatome in den Halogenphosphanen der Formeln (IIa) ist.

11. Verfahren nach einem oder mehreren der Ansprüche 1 bis 10, **dadurch gekennzeichnet, dass** das molare Verhältnis von auszutauschendem X in Verbindungen der Formel (IIa) zu Kupfer 5 bis 2000 beträgt.

12. Verfahren nach einem oder mehreren der Ansprüche 1 bis 11, **dadurch gekennzeichnet, dass** die Reaktionstemperatur -60°C bis 70°C beträgt.

13. Verfahren nach einem oder mehreren der Ansprüche 1 bis 12, **dadurch gekennzeichnet, dass** Di-(tert.-butyl)phenylphosphonium-tetrafluoroborat oder Di-(tert.-butyl)phenylphosphonium-hexafluorophosphat, hergestellt wird.

## Claims

1. Process for preparing tertiary phosphines of the formula (Ia)
PR¹ₙAr₍₃₋ₙ₎ (Ia)
where
R¹ is in each case C₁-C₁₂-alkyl, SiR²₃, (C₁-C₈-alkylene) -SiR²₃, C₁-C₁₂-fluoroalkyl, phenyl, pyridyl or o-, m- or p-tolyl, naphthyl or benzyl, where the radicals
R² are in each case independently C₁-C₁₂-alkyl
and where, in formula (Ia),
n is one or two and
Ar is a substituted or unsubstituted aryl radical,
wherein
halophosphines of the formula (IIa)
PXₙAr₍₃₋ₙ) (IIa)
where
n is one or two and
X is in each case independently chlorine, bromine or iodine and
Ar in formula (IIa) has the same definition as specified under the formula (Ia)
are reacted with organomagnesium compounds of the formula (IIIa)
(R¹)ₘMg(Y)₍₂₋ₘ₎ (III a)
where
R¹ have the definitions specified under the formula (Ia) and
m is one or two and
Y is chlorine, bromine or iodine
where the reaction is in each case carried out in the presence of salt and in the presence of copper (I) bromide-dimethyl sulphide complex,
**characterized in that** the tertiary phosphines are precipitated in the form of the analogous phosphonium tetrafluoroborates or phosphonium hexafluorophosphates with tetrafluoroboric acid or hexafluorophosphoric acid and are released by adding a base.

2. Process according to Claim 1, **characterized in that** the salts used are of the formula (VII)
(cation⁺) (anion⁻) (VII)
where
(cation⁺) is a substituted ammonium, phosphonium or arsonium cation or an alkali metal ion and
(anion⁻) is the anion of an organic or inorganic acid.

3. Process according to one or more of Claims 1 to 2, **characterized in that** the molar ratio of salt to copper in the reaction mixture is 0.05:1 to 10:1.

4. Process according to one or more of Claims 1 to 3, **characterized in that** the reaction is carried out in the presence of solvent.

5. Process according to Claim 4, **characterized in that** the proportion by volume of aromatic or aliphatic hydrocarbons is selected in such a way that it is 10% or more based on the entire reaction mixture.

6. Process according to one or more of Claims 1 to 5, **characterized in that** Ar is a carbocyclic aromatic radical having 6 to 24 framework carbon atoms or a heteroaromatic radical having 4 to 24 framework atoms where no, one, two or three framework atoms per cycle, but at least one framework atom in the entire molecule, are heteroatoms which are selected from the group of nitrogen, sulphur or oxygen and where the carbocyclic aromatic radical or heteroaromatic radical may also be substituted by up to five identical or different substituents per cycle which are selected from the group of fluorine, chlorine, bromine, nitro, cyano, protected formyl, C₁-C₁₂-alkyl, C₁-C₁₂-fluoroalkyl, phenyl, pyridyl, o-, m- or p-tolyl, naphthyl, benzyl, -PO-[(C₁-C₈)-alkyl]₂, -PO [phenyl, pyridyl, o-, m- or p-tolyl, or naphthyl]₂, -PO- [(C₁-C₈) - alkyl) phenyl, pyridyl, o-, m- or p-tolyl, or naphthyl], tri(C₁-C₈-alkyl)siloxyl or radicals of the general formula (IV)
A-D-R³ (IV)
where, independently,
A is absent or is a C₁-C₈-alkylene radical and
D is oxygen, sulphur or NR⁴
where
R⁴ is hydrogen, C₁-C₈-alkyl, benzyl or phenyl, pyridyl, o-, m- or p-tolyl, or naphthyl and
R³ is C₁-C₈-alkyl, benzyl, C₁-C₈-haloalkyl or phenyl, pyridyl, o-, m- or p-tolyl, or naphthyl
NR³R⁴ together is a cyclic amino radical
or radicals of the general formulae (Va-d)
A-SOR³ (Va)
A-SO₂-R³ (Vb)
A-CN (Vc)
A-CO₂M (Vd)
where A and R³ are each as defined above and M may be an alkali metal ion, half an equivalent of an alkaline earth metal ion or a quaternary ammonium ion.

7. Process according to one or more of Claims 1 to 6, **characterized in that** R¹ is C₁-C₁₂-alkyl, SiR²₃, CH₂SiR²₃ or phenyl, pyridyl, o-, m- or p-tolyl, or naphthyl, where the R² radicals are in each case independently C₁-C₁₂-alkyl, although in each case the condition applies that either
- the R¹ radicals are bonded via a secondary, tertiary or quaternary sp³-carbon atom or a quaternary silicon atom and, in the case of bonding via a secondary sp³-carbon atom, this secondary sp³-carbon atom also bears a quaternary sp³-carbon or silicon atom which is likewise a component of the R² radical.

8. Process according to one or more of Claims 1 to 7, **characterized in that** halophosphines of the formula (IIa) are used where X is chlorine.

9. Process according to one or more of Claims 1 to 8, **characterized in that** the halophosphines used are dichlorophenylphosphine, dichloro-2-methoxyphenylphosphine, dichloro-4-methoxyphenylphosphine, dichloro-2,4-dimethoxyphenylphosphine, dichloro-2,4,6-trimethoxyphenylphosphine, dichloro-2-tolylphosphine, dichloro-4-tolylphosphine, dichloro-2,4-xylylphosphine, dichloro-3,5-xylylphosphine, dichloro-2,4,6-trimethylphenylphosphine, dichloropentafluorophenylphosphine, dichloro-3,5-difluorophenylphosphine, dichloro-2,4-difluoro-phenylphosphine, dichloro-4-fluorophenylphosphine, dichloro-4-chlorophenylphosphine, dichloro-4-bromophenylphosphine, dichloro-4-(tert-butyl)phenylphosphine, dichloro-2,4,6-tri(tert-butyl)phenylphosphine, dichloro-4-(trifluoromethyl)phenylphosphine, dichloro-3,5-bis(trifluoromethyl)phenylphosphine, dichloro-2-biphenylphosphine, dichloro-3-biphenylphosphine, dichloro-1-naphthylphosphine, dichloro-2-naphthylphosphine, dichloro-5-acenaphthenyl-phosphine, dichloro-9-fluorenylphosphine, dichloro-9-anthracenylphosphine, dichloro-9-phenanthrylphosphine, dichloro-1-pyrenylphosphine.

10. Process according to one or more of Claims 1 to 9, **characterized in that** the amount of organomagnesium compound used is 0.2 to 10 times the molar amount of the halogen atoms to be substituted in the halophosphines of the formula (IIa).

11. Process according to one or more of Claims 1 to 10, **characterized in that** the molar ratio of X to be exchanged in compounds of the formula (IIa) to copper is 5 to 2000.

12. Process according to one or more of Claims 1 to 11, **characterized in that** the reaction temperature is -60°C to 70°C.

13. Process according to one or more of Claims 1 to 12, **characterized in that** di(tert-butyl) phenylphosphonium tetrafluoroborate or di(tert-butyl)phenylphosphonium hexafluorophosphate is prepared.

## Revendications

1. Procédé pour la préparation de phosphanes tertiaires de formule (Ia)
PR¹ₙAr₍₃₋ₙ) (Ia)
dans laquelle
R¹ représente à chaque fois C₁-C₁₂-alkyle, SiR²₃, (C₁-C₈-alkylène)-SiR²₃, C₁-C₁₂-fluoroalkyle, phényle, pyridyle, o-toluyle, m-toluyle ou p-toluyle, naphtyle ou benzyle,
R² représente, à chaque fois indépendamment l'un de l'autre, C₁-C₁₂-alkyle
et où, dans la formule (Ia)
n vaut un ou deux et
Ar représente un radical aryle substitué ou non substitué,
où
on transforme des halogénophosphanes de formule (IIa)
PXₙAr₍₃₋ₙ₎ (IIa)
dans laquelle
n vaut un ou deux et
X représente, à chaque fois indépendamment, chlore, brome ou iode et
dans la formule (IIa) Ar présente la même signification que celle mentionnée pour la formule (Ia), avec des composés organomagnésiens de formule (IIIa)
(R¹)ₘMg(Y) ₍₂₋ₘ₎ (IIIa)
dans laquelle
R¹ présente les significations mentionnées pour la formule (Ia) et
m vaut un ou deux et
Y représente chlore, brome ou iode,
où la transformation est réalisée à chaque fois en présence de sel et en présence d'un complexe bromure de cuivre (I)-diméthylsulfure, **caractérisé en ce que** les phosphanes tertiaires sont précipités sous forme des tétrafluoroborates ou des hexafluorophosphates de phosphonium analogues avec de l'acide tétrafluoroborique ou hexafluorophosphorique et sont libérés par l'addition d'une base.

2. Procédé selon la revendication 1, **caractérisé en ce qu'**on utilise des sels de formule (VII)
(cation+)(anion-) (VII),
dans laquelle
(cation+) représente des cations ammonium, phosphonium, arsénium substitués ou des ions de métal alcalin, et
(anion-) représente l'anion d'un acide organique ou inorganique.

3. Procédé selon l'une ou plusieurs des revendications 1 à 2, **caractérisé en ce que** le rapport molaire de sel à cuivre dans le mélange réactionnel est de 0,05:1 à 10:1.

4. Procédé selon l'une ou plusieurs des revendications 1 à 3, **caractérisé en ce que** la transformation est réalisée en présence de solvants.

5. Procédé selon la revendication 4, **caractérisé en ce que** la proportion volumique d'hydrocarbures aromatiques ou aliphatiques est choisie de manière telle qu'elle est de 10% ou plus par rapport à la totalité du mélange réactionnel.

6. Procédé selon l'une ou plusieurs des revendications 1 à 5, **caractérisé en ce que** Ar représente des radicaux aromatiques carbocycliques comprenant 6 à 24 atomes de carbone de structure ou des radicaux hétéroaromatiques comprenant 4 à 24 atomes de structure, où aucun, un, deux ou trois atomes de structure par cycle, dans la totalité de la molécule cependant au moins un atome de structure, est/sont un/des hétéroatome(s), qui est/sont choisi(s) dans le groupe azote, soufre ou oxygène et où les radicaux aromatiques carbocycliques ou hétéroaromatiques peuvent en outre être substitués par jusqu'à cinq substituants identiques ou différents par cycle, qui sont choisis dans le groupe fluor, chlore, brome, nitro, cyano, formyle protégé, C₁-C₁₂-alkyle, C₁-C₁₂-fluoroalkyle, phényle, pyridyle, o-toluyle, m-toluyle ou p-toluyle, naphtyle, benzyle, -PO- [(C₁-C₈) -alkyle] ₂, -PO- [phényle, pyridyle, o-toluyle, m-toluyle ou p-toluyle ou naphtyle] ₂, -PO- [((C₁-C₈) -alkyl) (phényle, pyridyle, o-toluyle, m-toluyle ou p-toluyle ou naphtyle)], tri(C₁-C₈-alkyl)siloxyle ou des radicaux de formule générale (IV),
A-D-R³ (IV)
dans laquelle, indépendamment l'un de l'autre
A manque ou représente un radical C₁-C₈-alkylène et
D représente oxygène, soufre ou NR⁴,
où
R⁴ signifie hydrogène, C₁-C₈-alkyle, benzyle, phényle, pyridyle, o-toluyle, m-toluyle ou p-toluyle ou naphtyle et
R³ représente C₁-C₈-alkyle, benzyle, C₁-C₈-halogénoalkyle ou phényle, pyridyle, o-toluyle, m-toluyle ou p-toluyle ou naphtyle, ou
NR³R⁴ représente, ensemble, un radical amino cyclique, ou des radicaux des formules générales (Va-d)
A-SOR³ (Va)
A-SO₂-R³ (Vb)
A-CN (Vc)
A-CO₂M (Vd)
dans lesquelles A et R³ présentent la signification susmentionnée et M peut signifier un ion de métal alcalin, un demi-équivalent d'un ion alcalino-terreux
ou un ion d'ammonium quaternaire.

7. Procédé selon l'une ou plusieurs des revendications 1 à 6, **caractérisé en ce que** R¹ représente C₁-C₁₂-alkyle, SiR²₃, CH₂SiR²₃ ou phényle, pyridyle, o-, m- ou p-toluyle, naphtyle, où les radicaux R² représentent, à chaque fois indépendamment l'un de l'autre, C₁-C₁₂-alkyle, à chaque fois à condition que
- les radicaux R¹ soient liés via un atome de carbone sp³ secondaire, tertiaire ou quaternaire ou un atome de silicium quaternaire et, dans le cas de la liaison via un atome de carbone sp³ secondaire, cet atome de carbone sp³ secondaire porte en outre un atome de carbone sp³ ou de silicium quaternaire, qui est également un constituant du radical R².

8. Procédé selon l'une ou plusieurs des revendications 1 à 7, **caractérisé en ce qu'**on utilise des halogénophosphanes de formule (IIa), dans laquelle X représente chlore.

9. Procédé selon l'une ou plusieurs des revendications 1 à 8, **caractérisé en ce qu'**on utilise comme halogénophosphanes : dichlorophénylphosphane, dichloro-2-méthoxyphénylphosphane, dichloro-4-méthoxyphénylphosphane, dichloro-2,4-diméthoxyphénylphosphane, dichloro-2,4,6-triméthoxyphénylphosphane, dichloro-2-toluylphosphane, dichloro-4-toluylphosphane, dichloro-2,4-xylylphosphane, dichloro-3,5-xylylphosphane, dichloro-2,4,6-triméthylphénylphosphane, dichloropentafluorophénylphosphane, dichloro-3,5-difluorophénylphosphane, dichloro-2,4-difluorophénylphosphane, dichloro-4-fluorophénylphosphane, dichloro-4-chlorophénylphosphane, dichloro-4-bromophénylphosphane, dichloro-4-(tért-butyl)phénylphosphane, dichloro-2,4,6-tri(tert-butyl)phénylphosphane, dichloro-4-(trifluorométhyl)phénylphosphane, dichloro-3,5-bis(trifluorométhyl)phénylphosphane, dichloro-2-biphénylphosphane, dichloro-3-biphénylphosphane, dichloro-1-naphtylphosphane, dichloro-2-naphtylphosphane, dichloro-5-acénaphténylphosphane, dichloro-9-fluorénylphosphane, dichloro-9-anthracénylphosphane, dichloro-9-phénanthrylphosphane, dichloro-1-pyrénylphosphane.

10. Procédé selon l'une ou plusieurs des revendications 1 à 9, **caractérisé en ce que** la quantité de composé organomagnésien utilisé représente 0,2 à 10 fois la quantité molaire des atomes d'halogène à substituer dans les halogénophosphanes de formule (IIa).

11. Procédé selon l'une ou plusieurs des revendications 1 à 10, **caractérisé en ce que** le rapport molaire de X à remplacer dans les composés de formule (IIa) à cuivre est de 5 à 2000.

12. Procédé selon l'une ou plusieurs des revendications 1 à 11, **caractérisé en ce que** la température de réaction est de -60°C à 70°C.

13. Procédé selon l'une ou plusieurs des revendications 1 à 12, **caractérisé en ce qu'**on prépare du tétrafluoroborate de di-(tert-butyl)phénylphosphonium ou de l'hexafluorophosphate de di-(tert-butyl)phénylphosphonium.
